# EUROPEAN PATENT SPECIFICATION

(11) **EP 2 093 438 B1**
(45) Date of publication and mention of the grant of the patent: **10.08.2011**
(21) Application number: 08003096.8
(22) Date of filing: 20.02.2008
(51) Int. Cl.: F16C 1/26

(54) **Bowden cable and casing therefore**
Bowdenzug und Gehäuse dafür
Transmission Bowden et son boîtier

(43) Date of publication of application: 26.08.2009
(73) Proprietor: GM Global Technology Operations LLC, Detroit, MI 48265-3000 (US)
(72) Inventor: Hahn, Thorsten, 55239 Gau-Odernheim (DE); Geiberger, Axel, 55116 Mainz (DE)
(74) Representative: Strauss, Peter

(56) References cited:
- WO-A-00/19116
- DE-A1- 3 021 533
- DE-A1- 19 541 549
- US-A- 2 129 303
- US-A- 3 812 738

## Description

The present invention relates to a Bowden cable and to a Bowden cable casing which can be used for transmitting pulling and/or pushing forces e.g. for driving shifting movements in a transmission for a motor vehicle.

A Bowden cable is generally known to comprise a tubular casing, which is usually flexible but resistant against compression in its longitudinal direction, and a wire which is longitudinally displaceable in a cavity of the casing. In order to avoid excessive friction between the wire and the casing, the diameter of the wire is usually slightly less than that of the cavity. Due to this difference in diameter, the wire is able to vibrate within the cavity and, if the amplitude of the vibration becomes excessive, it will hit against the casing, causing a rattling noise.

Cable rattling might be prevented if the cable fitted tightly inside the casing. This approach is followed in JP 2000 314 416A. This document discloses a casing for a push-pull control cable having a hexagonal cavity. Dimension variations of the cavity and the cable slidably received in it, which may be due to manufacturing tolerances or to different thermal expansion coefficients of cable and casing, can be accommodated by slightly distorting the cross section of the casing. Since the casing must not be too soft in order to be compression resistant, it is still difficult to ensure that friction between cable and casing does not become excessive.

DE 30 21 533 A1 suggests to prevent vibrations of the inner wire in a Bowden cable by providing a flexible plastic hose in a clearance between the wire and the casing. The plastic hose has a plurality of helicoidal webs at its inner and outer surfaces and can be made flexible enough to accommodate variations of the diameters of the wire and the cavity by distorting its cross section. However, the plastic hose makes this Bowden cable rather expensive and difficult to assemble.

US 3 214 995 discloses a push-pull cable with a plastic-lined casing, in which the casing is formed by helically wrapping a flat metal wire around an extruded plastic tubing. The pressure of the wrapping wire causes helicoidal webs to form at an inner side of the tubing, which are in contact with the push-pull wire extending straight through the tubing. Friction between the helical webs and the push-pull wire depends critically on the tension of the wire wrapped around the tubing. The tension of the wrapping wire must be controlled very carefully in order to ensure that webs become prominent enough to prevent the push-pull wire from vibrating and that the friction between the push-pull wire and the tubing does not become excessive. Controlling the tension is the more difficult the broader the wrapping wire is. Therefore the pitch of the wrapping wire is not more than approximately the diameter of the push-pull wire.

DE 195 41 549 A1 discloses a flexible shaft assembly comprising a flexible shaft which is rotatable within a cavity of a tubular casing, and a helical spring is mounted at an outer side of the casing. The inner diameter of the spring is slightly less than the outer diameter of the casing.

The object of the present invention is to provide a Bowden cable and a casing therefore in which vibrations of the push-pull wire are reliably prevented without the risk of excessive friction.

This object is achieved, on the one hand, by a Bowden cable comprising a casing and a wire extending in a cavity of said casing, points of contact between the wire and the casing being unevenly distributed on the circumference of the wire in each cross section, and a clearance extending helicoidally along the wire, in which the helicoidal clearance has a pitch at least equal to twice the diameter of the wire and in each cross section the clearance extends around at least half of the circumference of the wire. Since the pitch of the clearing is substantially longer here than in US 3 214 995, the wire can yield easily to a pressure at a point of contact so that although the cross section of the cavity and/or the diameter of the wire may vary along the Bowden cable due to manufacturing tolerances, there is no risk of the friction between wire and casing becoming excessive. Since the points of contact are located on a cylinder surface, the diameter of which is less than the diameter of the wire, the wire cannot go straight through the casing, but is urged into a slightly tortuous shape by the casing.

The Bowden cable is rather easy to manufacture if the clearance extends helicoidally along the wire. In that case the entire casing or at least an inner liner thereof may e.g. be formed by extrusion.

In order to avoid excessive bending stress of the wire, the helicoidal clearance preferably has a pitch at least equal to five times the diameter of the wire.

In order to effectively prevent the wire from vibrating, the pitch should not be more than approximately 50 times the diameter of the wire.

The points of contact may define at least one helicoidal curve.

Such a curve may be formed by at least one helicoidal web formed at an inner surface of the casing.

In order to stabilize the position of the wire inside the casing, it is preferable that there should be at least two helicoidal webs. Preferably these are located with respect to each other at an angle of more than 60 degrees and less than 180 degrees.

If the wire is conventionally formed by twisting a plurality of wire strands, the direction of twist of the wire should opposite to that of the web, in order to avoid the wire from rotating when it is displaced in the casing.

Further features and advantages of the invention will become apparent from the subsequent description of embodiments thereof referring to the appended drawings.
- Fig. 1: is a perspective view of a fragment of a Bowden cable casing according to the present invention;
- Fig. 2: is a longitudinal section of the casing of fig. 1 and of a wire extending along the cavity of the casing;
- Fig. 3: is a cross section of the Bowden cable taken along plane III/III of fig. 2;
- Fig. 4: is a cross section analogous to fig. 3 of a Bowden cable according to a second embodiment of the invention; and
- Fig. 5: is a cross section analogous to fig. 3 of a Bowden cable according to a third embodiment of the invention.

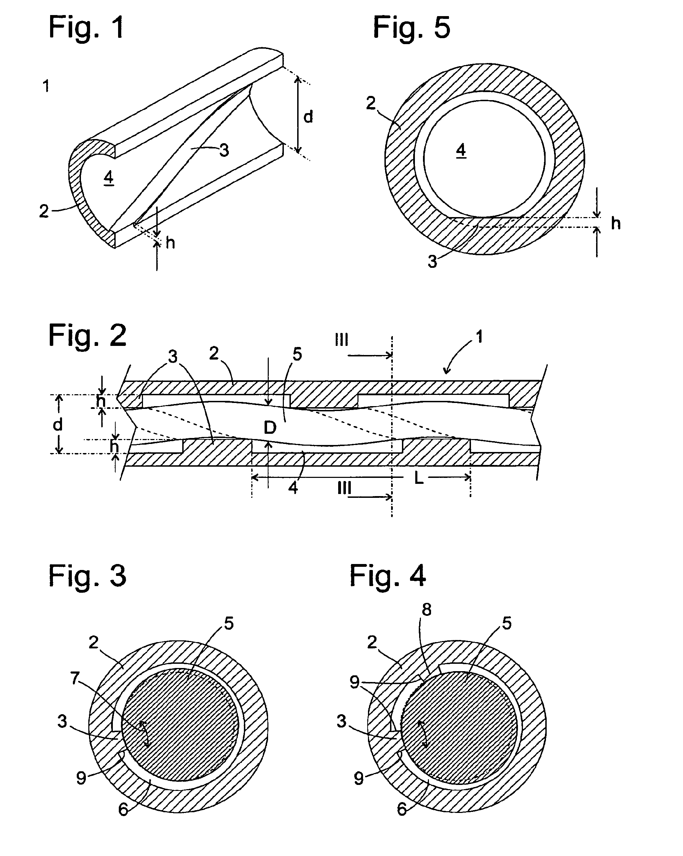

Fig. 1 is a perspective view of a fragment of a casing 1 for a Bowden cable according to a first embodiment of the invention. The casing 1 comprises a hollow cylindrical shell 2, half of which is shown in fig. 1, and a web 3 of a substantially rectangular or trapezoidal cross section extending helicoidally along an inner surface of shell 2. In the casing portion shown in fig. 1, the web 3 extends around approximately a quarter of the circumference of the inner cavity 4 of casing 1 so that the pitch D (see fig. 2) of the web 3 can be estimated to be approximately 10 times the diameter d of cavity 4. The dimension of the web 3 in the radial direction of shell 2, i.e. the height h of the web 3, is a small fraction of diameter d, e.g. less than d/10.

It is easily conceivable that the summit of the web 3 defines an imaginary cylindrical surface having a diameter of (d-2h) and extending coaxially with respect to the inner and outer surfaces of shell 2.

Fig. 2 is a longitudinal section of a portion of casing 1 showing a push-pull wire 5 extending within the cavity 4. The wire 5 has a circular cross section and a diameter D between d and d-2h. This is why the wire 5 cannot go straight along cavity 4 but is slightly bent into a helicoidal configuration.

As shown in the cross section of fig. 3 the wire 5 is not squeezed in the casing 1. There is a clearance 6 extending all around the wire 5, from one side of web 3 to the other. Therefore, the cross section of the casing is not distorted by the wire 5, and the pressure ramming between the summit of web 3 is due exclusively to elastic bending of wire 5 and/or casing 1. The pressure between web 3 and wire 5 does not depend critically on dimensional variations of the casing 1 or the wire 5 so that the friction occurring between casing and wire if the wire 5 is displaced is closely similar for Bowden wires manufactured in a same series, and is practically not influenced by possibly different thermal expansion characteristics of casing 1 and wire 5.

In the cross section of fig. 3, the wire 5 is supported at a single region of its circumference by the one web 3. If the wire 5 is very flexible, and pitch L of web 3 is long, there is a possibility of the wire 5 rocking around a fulcrum formed by web 3, as suggested by double-pointed arrow 7 in fig. 3.

This rocking motion is excluded in a second embodiment of the Bowden wire, shown in cross section in fig. 4. According to this embodiment, the casing 1 comprises two helicoidal webs 3, 8, both of which extend parallel to each other along the inner surface of shell 2 and have their respective summits in contact with wire 5. Thus the wire 5 is supported at two locations in each cross section. Also in this embodiment there is a clearance 6 extending around more than half of the circumference of the wire 5, by which variations of the transversal dimensions of casing 1 and wire 5 can be compensated.

It is easily seen that more webs might be provided without substantially modifying the effect of the invention, provided that a clearance 6 spanning at least half of the circumference of the wire 5 is left between two of said webs.

It is readily apparent that the steep sides 9 of the webs 3, 8 shown in fig. 3 and 4 are not relevant for the effect of the invention, and that the webs 8 might have practically any cross section, as long as there is the above-mentioned imaginary cylindrical contact surface for the wire 3 having a diameter smaller than D. For example, fig. 5 shows a variant of the embodiment of fig. 3, in which the web 3 is so broad that its sides vanish completely.

### List of reference signs

- 1.: casing
- 2.: shell
- 3.: web
- 4.: cavity
- 5.: wire
- 6.: clearance
- 7.: arrow
- 8.: web
- 9.: side

## Claims

1. A Bowden cable comprising a casing (1) and a wire (5) extending in a cavity (4) of said casing (1), points of contact between the wire (5) and the casing (1) being unevenly distributed on the circumference of the wire (5) in each cross section, and a clearance (6) extending helicoidally along the wire (5), **characterized in that** the helicoidal clearance (6) has a pitch (L) at least equal to twice the diameter (D) of the wire (5), that in each cross section the clearance (6) extends around at least half of the circumference of the wire (5), and that the points of contact are located on a cylinder surface, the diameter (d-2h) of which is less than the diameter (D) of the wire (5).

2. The Bowden cable of claim 1, wherein the helicoidal clearance (6) has a pitch (L) of at least five times the diameter (D) of the wire (5).

3. The Bowden cable of any of the preceding claims, wherein the helicoidal clearance (6) has a pitch (L) of at most fifty times the diameter (D) of the wire (5).

4. The Bowden cable of any of the preceding claims, wherein the points of contact define at least one helicoidal curve.

5. The Bowden cable of any of the preceding claims, wherein the points of contacts are located on at least one helicoidal web (3, 8) formed at an inner surface of the casing (1).

6. The Bowden cable of any of the preceding claims, wherein the casing (1) has a plurality of helicoidal webs (3, 8), and the webs (3, 8) are unevenly spaced.

7. The Bowden cable of claim 5, wherein two webs (3, 8) are located at an angle of more than 60° and less than 180° with respect to each other.

8. The Bowden cable of claim 5, 6 or 7, wherein the wire is formed by twisting a plurality of wire strands, the direction of twist of the wire being opposite to that of the web (3, 8).

9. The Bowden cable of any of the preceding claims, wherein the casing (1) or at least an inner liner thereof is extrusion-molded.

## Patentansprüche

1. Bowdenzug, der ein Gehäuse (1) und einen Draht (5) umfasst, der sich in einem Hohlraum (4) des Gehäuses (1) erstreckt, ferner umfassend Kontaktpunkte zwischen dem Draht (5) und dem Gehäuse (1), die in jedem Querschnitt am Außenumfang des Drahtes (5) ungleichmäßig verteilt sind, und einen Spielraum (6), der sich schraubenartig den Draht (5) entlang erstreckt, **dadurch gekennzeichnet, dass** der schraubenartige Spielraum (6) eine Steigung (L) aufweist, die mindestens zweimal dem Durchmesser (D) des Drahtes (5) entspricht, dass sich in jedem Querschnitt der Spielraum (6) um mindestens die Hälfte des Außenumfangs des Drahtes (5) erstreckt und dass die Kontaktpunkte auf einer Zylinderoberfläche angeordnet sind, dessen Durchmesser (d-2h) kleiner als der Durchmesser (D) des Drahtes (5) ist.

2. Bowdenzug gemäß Anspruch 1, wobei der schraubenartige Spielraum (6) eine Steigung (L) von mindestens fünfmal dem Durchmesser (D) des Drahtes (5) aufweist.

3. Bowdenzug gemäß einem der vorangehenden Ansprüche, wobei der schraubenartige Spielraum (6) eine Steigung (L) von mindestens fünfzigmal dem Durchmesser (D) des Drahtes (5) aufweist.

4. Bowdenzug gemäß einem der vorangehenden Ansprüche, wobei die Kontaktpunkte mindestens eine schraubenartige Kurve beschreiben.

5. Bowdenzug gemäß einem der vorangehenden Ansprüche, wobei die Kontaktpunkte an mindestens einem schraubenartigen Steg (3, 8) angeordnet sind, der an einer Innenoberfläche des Gehäuses (1) gebildet ist.

6. Bowdenzug gemäß einem der vorangehenden Ansprüche, wobei das Gehäuse (1) eine Mehrzahl schraubenartiger Stege (3, 8) aufweist und die Stege (3, 8) ungleichmäßig verteilt sind.

7. Bowdenzug gemäß Anspruch 5, wobei zwei Stege (3, 8) in einem Winkel von mehr als 60° und weniger als 180° mit Bezug zueinander angeordnet sind.

8. Bowdenzug gemäß Anspruch 5, 6 oder 7, wobei der Draht durch Verdrehen einer Mehrzahl von Drahtlitzen gebildet wird, wobei die Drehrichtung des Drahtes jener des Stegs (3, 8) entgegengesetzt ist.

9. Bowdenzug gemäß einem der vorangehenden Ansprüche, wobei das Gehäuse (1) oder wenigstens eine Innenauskleidung desselben im Extrusionsverfahren geformt sind.

## Revendications

1. Une transmission Bowden comprenant un boîtier (1) et un câble (5) s'étendant dans une cavité (4) dudit casier (1), des points de contact entre le câble (5) et le boîtier (1) étant distribués de façon inégale sur la circonférence du câble (5) dans chaque section transversale, et un espace (6) s'étendant hélicoïdalement le long du câble (5), **caractérisé en ce que** l'espace hélicoïdal (6) possède un pas (L) au moins égal à deux fois le diamètre (D) du câble (5), **en ce que** dans chaque section transversale, l'espace (6) s'étend autour au moins de la moitié de la circonférence du câble (5), et **en ce que** les points de contact se trouvent sur une surface cylindrique, dont le diamètre (d-2h) est inférieur au diamètre (D) du câble (5).

2. La transmission Bowden de la revendication 1, où l'espace hélicoïdal (6) possède un pas (L) d'au moins cinq fois le diamètre (D) du câble (5).

3. La transmission Bowden de n'importe quelle revendication précédente, où l'espace hélicoïdal (6) possède un pas (L) d'au moins cinquante fois le diamètre (D) du câble (5).

4. La transmission Bowden de n'importe quelle revendication précédente, où les points de contact définissent au moins une courbe hélicoïdale.

5. La transmission Bowden de n'importe quelle revendication précédente, où les points de contact se trouvent sur au moins une toile hélicoïdale (3, 8) formée sur une surface intérieure du boîtier (1).

6. La transmission Bowden de n'importe quelle revendication précédente, où le boîtier (1) possède une pluralité de toiles hélicoïdales (3, 8) et les toiles (3, 8) sont espacées de façon inégale.

7. La transmission Bowden de la revendication 5, où deux toiles (3, 8) se trouvent à un angle de plus de 60°et de moins de 180° l'une par rapport à l'autre.

8. La transmission Bowden des revendications 5, 6 ou 7, où le câble est formé par la torsion d'une pluralité de brins de câbles, la direction de la torsion du câble étant opposée à celle de la toile (3, 8).

9. La transmission Bowden de n'importe quelle revendication précédente, où le boîtier (1) ou au moins un de ses séparateurs intérieurs est moulé par extrusion.
